# EUROPÄISCHE PATENTSCHRIFT

(11) **EP 0 447 626 B1**
(45) Veröffentlichungstag und Bekanntmachung des Hinweises auf die Patenterteilung: **08.02.1995**
(21) Anmeldenummer: 90122255.4
(22) Anmeldetag: 22.11.1990
(51) Int. Cl.: B62D 5/04

(54) **Aktuator für eine kybernetisce Lenkung**
Actuator for a cybernetic steering
Déclencheur pour une direction cybernétique

(30) Priorität: 23.03.1990 DE 4009400
(43) Veröffentlichungstag der Anmeldung: 25.09.1991
(73) Patentinhaber: Dr.Ing.h.c. F. Porsche Aktiengesellschaft, 70435 Stuttgart (DE)
(72) Erfinder: Moll, Patrick, W-8000 München 81 (DE)

(56) Entgegenhaltungen:
- EP-A- 0 333 108
- DE-A- 3 830 654
- GB-A- 2 161 770
- GB-A- 2 166 099
- GB-A- 2 166 395

## Beschreibung

Die Erfindung bezieht sich auf einen Aktuator nach dem Oberbegriff des Anspruchs 1.

Aus der DE-A 38 30 654 ist eine Vorhaltelenkung für Kraftfahrzeuge bekannt, die zwischen einer Eingangswelle des Lenkhandrades und einer Ausgangswelle des Lenkgetriebes eine Stelleinrichtung, bestehend aus einem Planetengetriebe und einem mittels einer Regelvorrichtung gesteuerten Motor, aufweist. Desweiteren ist aus der DE-A 24 39 823 eine Lenkvorrichtung mit Zeitvorhalt bekannt, bei der in einem sich vom Lenkhandrad bis zum Lenkgetriebe erstreckenden Gehäuse ein elektrischer Steuermotor, eine Trennkupplung sowie ein Zahnradantrieb mit Potentiometer angeordnet sind.

Aus der GB-A 2 166 395 ist ein Aktuator für eine kybernetische Lenkung eines Fahrzeugs bekannt, bei der durch eine von einer rechnergesteuerten Regelvorrichtung angesteuerten Stellvorrichtung ein durch ein Lenkhandrad gesteuerter Lenkwinkel der Lenkräder, insbesondere in Abhängigkeit von vorgegebenen Parametern, einstellbar und/oder veränderbar ist. Zwischen einer mit dem Lenkhandrad verbundenen Eingangswelle einer Lenkanlage und einer zu einem Lenkgetriebe geführten Ausgangswelle ist die Stellvorrichtung in einem Gehäuse gehalten. Jeweils ein mit den Wellen ein- und ausgangsseitig verbundener E-Motor ist für ein Lenkritzel des Lenkgetriebes und für ein Lenkhandrad vorgesehen.

Aufgabe der Erfindung ist es, einen Aktuator für eine kybernetische Lenkung zu schaffen, der als kompakte Baueinheit platzsparend und einfach nachrüstbar im Lenkungsstrang eines Kraftfahrzeugs zu montieren ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die Stellvorrichtung für den Aktuator, im wesentlichen bestehend aus zwei E-Motoren mit zwischengeschalteter Kupplung sowie mindestens zwei Lenkwinkelsensoren, in einem kompakten, kleinbauenden und zylindrischen Gehäuse unterzubringen ist.

Die Vorteile des Aktuators gegenüber den bekannten Einrichtungen bestehen darin, daß er universell einsetzbar ist für eine Überlagerungslenkung, für eine Lenkung mit variabler Übersetzung und/oder als Aktuator für ein zeitweilig rechnergesteuertes Fahrzeug. Er ist platzsparend unterzubringen, da die E-Motoren, Kupplung und Sensoren in einem kompakten Gehäuse zusammengefasst sind. Die Montage ist einfach und eine kostengünstige Nachrüstung ist möglich. Unabhängig vom Fahrzeugtyp schließt die Kupplung in jeder Stellung der Zahnscheiben zueinander.

Insbesondere wird durch die E-Motoren ein spiel freier Antrieb und ein geringes Schleppmoment im abgeschalteten Zustand erzielt. Eine Simulation des Rückstellmoments ist für den Fahrer unabhängig von der Lenkübersetzung. Auch ist eine direkte Erfassung des Rückstellmoments der Vorderachse durch Messung der Stromaufnahme des elektrischen Aktuators möglich. Es wird ein Lenkanschlag durch Schließen der Kupplung erreicht, wobei bei einem Stromentzug die Kupplung sich durch Federkraft selbsttätig schließt und somit ein Durchtrieb vom Lenkhandrad bis zum Lenkgetriebe erfolgt, wodurch Gefahrenmomente ausgeschlossen werden.

Anwendung einer solchen kybernetischen Lenkung mit der erfindungsgemäßen Stellvorrichtung besteht insbesondere im Aussteuern von Störungen (Seitenwind, Spurwellen, Lastwechsel und Bremsen in der Kurve). Es wird auch eine Verbesserung der Rückmeldung (Ausfiltern von Störungen, Simulation des Reifenrückstellmoments) erreicht. Desweiteren wird das Ansprechverhalten der Vorhaltelenkung verbessert. Es ist durch entsprechende Ansteuerung eine automatische Spurführung bei Stau und Kolonnenverkehr möglich. Es wird auch eine Verbesserung des Bedienkomforts dadurch erzielt, daß die Lenkübersetzung abhängig vom Einschlagwinkel und der Geschwindigkeit ansteuerbar ist.

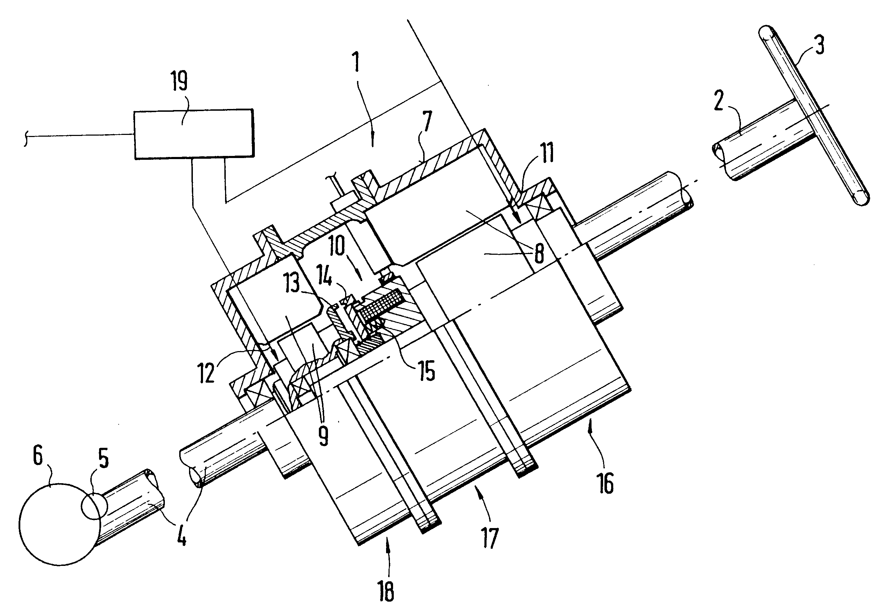

Ein Ausführungsbeispiel der Erfindung ist in der Zeichnung dargestellt, die eine Stellvorrichtung teilweise im Schnitt mit einer Regeleinrichtung zeigt.

Die Stellvorrichtung 1 ist zwischen einer Eingangswelle 2 eines Lenkhandrades 3 und einer Ausgangswelle 4, die über ein Lenkritzel 5 zu einem Lenkgetriebe 6 führt, angeordnet. Sie umfaßt in einem zylindrischen Gehäuse 7 zwei insbesondere koaxial angeordnete E-Motoren 8 und 9 mit zwischengeschalteter Kupplung 10. Der eine Motor 8 ist mit der Eingangswelle 2 und der andere Motor 9 mit der Ausgangswelle 4 verbunden.

Ein Rotor des Motors 8 bzw. 9 sitzt jeweils auf der Welle 2 bzw. 4 und ein umgebender Stator ist mit dem Gehäuse 7 verbunden.

An den Wellen 2 und 4 bzw. an den Motoren 8 und 9 sind jeweils Lenkwinkelsensoren 11 und 12 angeordnet, wobei auch mehr als zwei Sensoren zugeordnet sein können.

Die Kupplung 10 ist als Magnetzahnkupplung ausgeführt und weist miteinander korrespondierende Zahnscheiben 13 und 14 auf, wobei die eine Zahnscheibe 14 unter der Spannung einer Feder 15 steht.

Das Gehäuse 7 besteht aus mehreren miteinander verbundenen und koaxial zueinander angeordneten Gehäuseabschnitten 16, 17 und 18. Im ersten Gehäuseabschnitt 16 ist der mit der Eingangswelle 2 verbundene E-Motor 8 angeordnet, an den sich der zweite Gehäuseabschnitt 17 mit der Kupplung 10 sowie der dritte Gehäuseabschnitt 18 mit weiterem E-Motor 9 anschließt.

In diesem System ist das manuell betätigte Lenkhandrad 3 im Normalzustand vollständig vom Lenkgetriebe 6 bzw. vom Lenkritzel 5 getrennt. Bei einem Defekt oder einem systembedingten Ausfall stellt die Magnetzahnkupplung die mechanische Verbindung zwischen Lenkhandrad 3 und Lenkgetriebe 6 wieder her. Diese Magnetzahnkupplung 10 wird in einem stromlosen Zustand durch die Feder 15 geschlossen.
Der eine E-Motor 8 ist mit dem Lenkhandrad 3 verbunden und simuliert ein Lenkmoment, um darüber wie bei einer normalen Lenkung den Fahrer zu informieren. Der zweite E-Motor 9 bewegt das Lenkritzel 5 einer Servolenkung. Beide E-Motoren 8 und 9 werden über Lenkwinkelsensoren 11 und 12 und eventuell über weiteren Lenkwinkelsensoren von einer elektronischen Regeleinrichtung 19 kontrolliert.
Bei einem Defekt oder sonstigem Ausfall wird die Magnetzahnkupplung 10 stromlos. Die Zahnscheiben 13 und 14 werden durch die Feder 15 verbunden und das Lenkhandrad 3 wird starr an das Lenkgetriebe angeschlossen, so daß eine manuelle Lenkung des Fahrzeugs durch die geschlossene Kupplung aufgrund der mechanischen Verbindung zwischen Lenkhandrad und Servolenkung möglich wird.

## Patentansprüche

1. Aktuator für eine kybernetische Lenkung eines Fahrzeugs, bei der durch eine von einer rechnergesteuerten Regelvorrichtung (19) angesteuerten Stellvorrichtung (1) ein durch ein Lenkhandrad (3) gesteuerter Lenkwinkel der Lenkräder, insbesondere in Abhängigkeit von vorgegebenen Parametern, einstellbar und/oder veränderbar ist, wobei zwischen einer mit dem Lenkhandrad (3) verbundenen Eingangswelle (2) einer Lenkanlage und einer zu einem Lenkgetriebe (6) geführten Ausgangswelle (4) die Stellvorrichtung in einem Gehäuse (7) gehalten ist und wobei jeweils ein mit den Wellen (2 und 4) ein- und ausgangsseitig verbundener E-Motor (8 und 9) für ein Lenkritzel des Lenkgetriebes und für ein Lenkhandrad (3) vorgesehen ist, **dadurch gekennzeichnet,** daß die Stellvorrichtung (1) zusammen mit den beiden E-Motoren (8, 9) in einem zylinderförmigen Gehäuse (7) gehalten und zwischen den beiden E-Motoren (8 und 9) eine Kupplung (10) angeordnet ist.

2. Aktuator nach Anspruch 1, **dadurch gekennzeichnet,** daß das Gehäuse (7) aus mehreren miteinander verbundenen und koaxial zueinander angeordneten Gehäuseabschnitten (16, 17 und 18) besteht, wobei in einem ersten Gehäuseabschnitt (16) der mit der Eingangswelle (2) verbundene E-Motor (8) der Eingangswelle (2) mit mindestens einem Lenkwinkelsensor (11), in einem zweiten anschließenden Gehäuseabschnitt (17) die Kupplung (10) und in einem dritten Gehäuseabschnitt (18) der mit der Ausgangswelle (4) verbundene weitere E-Motor (9) mit mindestens einem Lenkwinkelsensor (12) angeordnet ist.

3. Aktuator nach den Ansprüchen 1 oder 2, **dadurch gekennzeichnet,** daß die beiden E-Motoren (8 und 9) jeweils zugeordneten Lenkwinkelsensoren (11 und 12) mit der Regelvorrichtung (19) derart verknüpft sind, daß eine Kontrolle des Drehwinkels bzw. der Drehwinkelgeschwindigkeit des Lenkhandrades (3) und des Lenkwinkels bzw. der Lenkwinkeländerungsgeschwindigkeit der Lenkräder erfolgt.

4. Aktuator nach einem oder mehreren der vorhergehenden Ansprüche, **dadurch gekennzeichnet,** daß die Kupplung (10) als Magnetzahnkupplung ausgeführt ist und miteinander korrespondierende Zahnscheiben (13 und 14) umfasst, die in einem stromlosen Zustand selbsttätig über eine Druckfeder (15) in Eingriff miteinander bringbar sind.

## Claims

1. An actuator for a cybernetic steering of a vehicle, in which a steering angle - controlled by a steering wheel (3) - of the steered wheels can be set and/or altered by an adjustment device (1) actuated by a computer-controlled regulating device (19), in particular as a function of pre-determined parameters, wherein the adjustment device is held in a housing (7) between an input shaft (2) of a steering unit connected to the steering wheel (3) and an output shaft (4) extending towards a steering mechanism (6), and wherein one electric motor (8 and 9) connected to the shafts (2 and 4) at the input and output ends is provided respectively for a steering pinion of the steering mechanism and for a steering wheel (3), **characterized in that** the adjustment device (1) together with the two electric motors (8, 9) is held in a cylindrical housing (7) and a coupling (10) is arranged between the two electric motors (8 and 9).

2. An actuator according to Claim 1, **characterized in that** the housing (7) comprises a plurality of portions (16, 17 and 18) connected together and arranged coaxially with one another, wherein the electric motor (8) - connected to the input shaft (2) - of the input shaft (2) with at least one steering-angle sensor (11) is arranged in a first housing portion (16), the coupling (10) is arranged in a second adjoining housing portion (17) and the further electric motor (9) connected to the output shaft (4) and having at least one steering-angle sensor (12) is arranged in a third housing portion (18).

3. An actuator according to Claim 1 or 2, **characterized in that** the steering-angle sensors (11 and 12) associated respectively with the two electric motors (8 and 9) are connected to the regulating device (19) in such a way that the rotational angle or the rotational-angle speed of the steering wheel (3) and the steering angle or the rate of change of the steering angle of the steered wheels are controlled.

4. An actuator according to one or more of the preceding Claims, **characterized in that** the coupling (10) is in the form of a magnetic toothed coupling and comprises mutually corresponding toothed discs (13 and 14) which can be brought into engagement with each other automatically in a state without current by way of a compression spring (15).

## Revendications

1. Déclencheur pour une direction cybernétique d'un véhicule automobile, dans lequel au moyen d'un dispositif de positionnement (1) commandé par un dispositif de réglage (19) assisté par ordinateur, il est possible de régler et/ou de modifier un angle de braquage des roues commandé par un volant (3) en particulier en fonction de paramètres donnés, le dispositif de positionnement étant maintenu dans un carter (7), entre un arbre d'entrée (2), relié au volant (3), d'un système de direction et un arbre de sortie (8), guidé vers un mécanisme de direction (6) , et un moteur électrique (6 et 9), relié aux arbres (2 et 4) côté entrée et côté sortie, étant prévu pour un pignon du mécanisme de direction et pour un volant (3), caractérisé en ce que le dispositif de positionnement (1) est maintenu avec les deux moteurs électriques (8, 9) dans le carter (7) cylindrique et un accouplement (10) est placé entre les deux moteurs électriques (8 et 9).

2. Déclencheur selon la revendication 1, caractérisé en ce que le carter (7) est constitué de plusieurs parties (16, 17 et 18) reliées entre elles et coaxiales les unes aux autres, dans une première partie (16) du carter étant monté le moteur électrique (8), relié à l'arbre d'entrée (2) avec au moins un capteur d'angle de braquage (11), dans une deuxième partie (17) faisant suite à la première étant monté l'accouplement (10) et dans une troisième partie (18), l'autre moteur électrique (9) relié à l'arbre de sortie (4) avec au moins un capteur d'angle de braquage (12).

3. Déclencheur selon les revendications 1 ou 2, caractérisé en ce que les deux moteurs électriques (8 et 9) sont reliés à des capteurs d'angle de braquage (11 et 12) respectifs avec le dispositif de réglage (19), de manière que s'effectue un contrôle de l'angle de rotation ou de la vitesse angulaire de rotation du volant (3) et de l'angle de braquage ou de la vitesse de variation de l'angle de braquage des roues directrices.

4. Déclencheur selon une ou plusieurs des revendications précédentes, caractérisé en ce que l'accouplement (10) est un embrayage denté magnétique et comporte des disques dentés (13 et 14) correspondant entre eux, qui lorsqu'ils ne sont pas parcourus par un courant, peuvent être amenés automatiquement en prise entre eux par un ressort de pression (15).
